# EUROPÄISCHE PATENTSCHRIFT

(11) **EP 4 073 963 B1**
(45) Veröffentlichungstag und Bekanntmachung des Hinweises auf die Patenterteilung: **07.02.2024**
(21) Anmeldenummer: 20820392.7
(22) Anmeldetag: 04.12.2020
(51) Int. Cl.: H04J 3/06, H04L 12/40

(54) **VERFAHREN ZUR OPTIMIERUNG DER ZEITSYNCHRONISATION ZWISCHEN ÜBER EIN KOMMUNIKATIONSNETZWERK VERBUNDENEN NETZWERKGERÄTEN**
METHOD FOR OPTIMIZING TIME SYNCHRONIZAION AMONG NETWORK NODES CONNECTED VIA A COMMUNICATION NETWORK
PROCÉDÉ DE SYNCHRONISATION DU TEMPS ENTRE DES DSIPOSITIFS DE RESEAU CONNECTÉS PAR UN RESEAU DE COMMMUNICATION

(30) Priorität: 12.12.2019 DE 102019219475
(43) Veröffentlichungstag der Anmeldung: 19.10.2022
(73) Patentinhaber: Continental Automotive Technologies GmbH, 30165 Hannover (DE)
(72) Erfinder: ZINNER, Helge, 60488 Frankfurt am Main (DE)
(74) Vertreter: Continental Corporation
(86) Internationale Anmeldenummer: PCT/EP2020/084683
(87) Internationale Veröffentlichungsnummer: WO 2021/115962

(56) Entgegenhaltungen:
- EP-A1- 3 016 306
- WO-A1-2017/198304
- WO-A1-2020/020936
- DE-A1-102013 224 697
- JEON YOUNGHWAN ET AL: "An efficient method of reselecting Grand Master in IEEE 802.1AS", THE 20TH ASIA-PACIFIC CONFERENCE ON COMMUNICATION (APCC2014), IEEE, 1. Oktober 2014 (2014-10-01), Seiten 303-308, XP032765584, DOI: 10.1109/APCC.2014.7091652 [gefunden am 2015-04-21]
- GEORG GADERER ET AL: "Improving Fault Tolerance in High-Precision Clock Synchronization", IEEE TRANSACTIONS ON INDUSTRIAL INFORMATICS, IEEE SERVICE CENTER, NEW YORK, NY, US, Bd. 6, Nr. 2, 1. Mai 2010 (2010-05-01), Seiten 206-215, XP011334313, ISSN: 1551-3203, DOI: 10.1109/TII.2010.2044580
- Ieee: "IEEE Std 1588 (TM) -2008 IEEE Standard for a Precision Clock Synchronization Protocol for Networked Measurement and Control Systems IEEE Instrumentation and Measurement Society", , 24. Juli 2008 (2008-07-24), XP055770288, Gefunden im Internet: URL:https://ieeexplore.ieee.org/stampPDF/g etPDF.jsp?tp=&arnumber=4579760&ref=aHR0cHM 6Ly9pZWVleHBsb3JlLmllZWUub3JnL2RvY3VtZW50L zQ1Nzk3NjA=
- KEVIN B STANTON ET AL: "Tutorial: The Time-Synchronization Standard from the AVB/TSN suite IEEE Std 802.1AS(TM)-2011 (and following) ; as-kbstanton-8021AS-tutorial-0714", IEEE DRAFT; AS-KBSTANTON-8021AS-TUTORIAL-0714-V01, IEEE-SA, PISCATAWAY, NJ USA, Bd. 802, Nr. v01, 29. Juli 2014 (2014-07-29), Seiten 1-45, XP068096296, [gefunden am 2014-07-29]

## Beschreibung

### FELD

Die vorliegende Erfindung betrifft Kommunikationsnetzwerke mit miteinander synchronisierten Netzwerkgeräten.

### HINTERGRUND

Ethernet-Technologien finden in vielen Bereichen Anwendung, in denen Computer miteinander vernetzt werden, und werden zunehmend auch in Fahrzeugen eingesetzt, wo sie ältere bzw. proprietäre Datenverbindungen und -busse ersetzen.

Ethernet-Verbindungen unterstützen auf dem Layer 3 des OSI-Schichtenmodells eine Vielzahl von Vermittlungsprotokollen für die Übertragung von Datenpaketen zwischen Sendern und Empfängern. In den höheren Protokollschichten erfolgt die Segmentierung des Datenstroms in Pakete, die Prozesskommunikation zwischen miteinander kommunizierenden Systemen, die Übersetzung von Daten in eine systemunabhängige Form und schließlich die Bereitstellung von Funktionen für Anwendungen. Auch ein vergleichsweise kleines Netzwerk räumlich nahe beieinander liegender vernetzter Geräte kann bereits eine Vielzahl von Routern und Switches aufweisen, welche von Sendern kommende Datenpakete zu den richtigen Empfängern leiten.

Wie in anderen Netzwerken können auch in Ethernet-Netzwerken Latenzen oder Verzögerungen neben der nominalen Geschwindigkeit der Netzwerkkomponenten und Schnittstellen einen großen Einfluss auf die pro Zeiteinheit tatsächlich übertragbare Datenmenge und die Dauer der Übertragung vom Sender zum Empfänger haben.

Latenzen oder Verzögerungen können unterschiedliche Quellen und Ursachen haben. Quellen für Verzögerungen einer Übertragung von Daten in einem Netzwerk sind insbesondere das sog. Transmission Delay, also die Zeit die ein Sender benötigt, um ein Datenpaket auf einer Kommunikationsverbindung bzw. einem Link abzusenden. Diese Verzögerung kann u.a. von der Länge des Datenpakets und der Bandbreite bzw. Geschwindigkeit des Netzwerks abhängen.

Die Signallaufzeit, englisch "Propagation Delay", bezeichnet die Zeit die ein von einem Sender über eine Kommunikationsverbindung abgesendetes Signal benötigt, um an einem Empfänger anzukommen. Diese Verzögerung hängt vor allem von der Entfernung zwischen Sender und Empfänger sowie der Ausbreitungsgeschwindigkeit des Signals ab. Die Ausbreitungsgeschwindigkeit von Funkwellen im Vakuum oder von Lichtwellen in Lichtleitern entspricht der Lichtgeschwindigkeit, in Kupferleitungen kann die Ausbreitungsgeschwindigkeit der Signale abhängig von deren Konstruktion auf bis zu zwei Drittel der Lichtgeschwindigkeit absinken.

Auch die Switch-Latenz kann eine wichtige Rolle für die nutzbare Datenrate spielen. Dies gilt insbesondere für Netzwerke, die Hochleistungs- und Cluster-Computeranwendungen unterstützen, wo es von Vorteil ist, entweder die Gesamtverzögerung oder die Variation der Verzögerung im Kommunikationspfad zwischen kommunizierenden Paaren oder Gruppen von Endpunkten zu minimieren. In vielen Fällen kann die Switch-Latenz einen viel stärkeren Einfluss auf die Performance von Anwendungen oder Diensten und die Benutzererfahrung haben als die nominelle Bandbreite der Verbindung.

Die Switch-Latenzzeit bezeichnet die Zeit, die ein Ethernet-Paket benötigt um einen Ethernet-Switch zu durchlaufen. Obwohl im Konzept einfach, gibt es in der Praxis eine Reihe von Faktoren die dazu führen können, dass die tatsächliche Latenz die ein Paket hat erheblich variiert, teilweise um Größenordnungen.

Die Switch-Latenzzeit wird zwischen einem Eingangs-Port und einem Ausgangs-Port an einem Ethernet-Switch gemessen. Sie hängt stark von dem verwendeten Switching-Paradigma des Switches ab: Cut-Through oder Store-and-Forward.

Store-and-Forward erfordert, dass das gesamte Paket vom Switch empfangen und zwischengespeichert wird, bevor eine Weiterleitungsentscheidung getroffen wird und die Paketübertragung über den Ausgangsport beginnt. Für bestimmte Weiterleitungsvorgänge, z.B. das Routing von Paketen auf Schicht 3, kann der Store and Forward-Betrieb erforderlich sein, wenn in einem Paketweiterleitungsvorgang komplexe Optionen erforderlich sind.

Die Cut-Through-Weiterleitung hingegen ermöglicht die Paketübertragung über den Ausgangsport, sobald genügend Daten empfangen wurden, um die Weiterleitungsentscheidung zu treffen. Bei der einfachen Layer-2-Weiterleitung kann dies z.B. erfolgen, sobald die Ziel-MAC-Adresse empfangen und zur Bestimmung des zugehörigen Ausgangsports nachgeschlagen wurde. Die Cut-Through-Weiterleitung wird von einem Switch paketweise entschieden.

Die Cut-Through-Weiterleitung kann eine Weiterleitung mit geringerer Latenz in einem Switch ermöglichen, die weitgehend unabhängig von der Paketlänge ist. Die Cut-Through-Weiterleitung ist jedoch nur unter bestimmten Bedingungen möglich. So kann die Cut-Through-Weiterleitung nur zwischen Schnittstellen erfolgen, die mit derselben Geschwindigkeit arbeiten, z.B. bei der Verbindung von 1 Gbps-zu-1 Gbps-Schnittstellen. Eine Verbindung zwischen Schnittstellen unterschiedlicher Geschwindigkeiten kann nicht erfolgen, als z.B. zwischen 1Gbps- und 100Mbps-Schnittstellen. Auch kann die Cut-Through-Weiterleitung nur erfolgen, wenn der Ausgangsport im Leerlauf ist, d.h. nicht von der Datenflusskontrolle "angehalten" wurde, und keine ausstehenden Frames zur Übertragung in der Warteschlange hat.

Es ist leicht zu erkennen, dass es häufig zu Konkurrenzen an einem Port kommen kann, wenn mehrere Paketströme in einem Netzwerk mit Schnittstellen mit unterschiedlichen Geschwindigkeiten für diesen Port bestimmt sind, selbst wenn die aggregierte Bandbreite die diese Ströme benötigen kleiner als die nominale Verbindungskapazität ist, und dass daher in vielen Fällen weniger Daten weitergeleitet werden, als mittels Cut-Through-Weiterleitung theoretisch möglich wäre.

Moderne Layer 2- oder Layer 3-Switches erreichen typischerweise eine Latenzzeit von Hunderten von Nanosekunden bis hin zu einigen zehn Mikrosekunden. Das breite Spektrum der Latenzzeiten ist in erster Linie das Ergebnis der Switch-Architektur und des Designs, obwohl je nach Anwendungsfall auch noch größere Unterschiede in den Latenzzeiten auftreten können. Zum Beispiel hat die Anzahl der Ports, die gleichzeitig verwendet werden, und die Art des Verkehrs, z.B. One-to-One-Verkehr, bei dem keine Paketströme um Ausgangsports konkurrieren oder voll vermaschter Verkehr, bei dem der gesamte Verkehr um Ausgangsports konkurriert, großen Einfluss auf die Latenzzeiten, da bei voll vermaschtem Verkehr Datenpakete bei Konkurrenz um einen Port längere Zeit in einer Warteschlange des Switches gepuffert werden können.

Die Switch-Latenz wird häufig auch im Zusammenhang mit dem sog. Queuing Delay genannt, bei dem die Verzögerung aller Wartezeiten in auf der Kommunikationsstrecke liegenden Switches aufsummiert wird.

In Switches, Routern oder anderen Netzwerkgeräten, welche Daten weiterleiten, kommt noch das sog. Processing Delay hinzu, mit dem die Zeit gemeint ist, die für die Auswertung eines Paket-Headers oder für Fehlerkorrekturmaßnahmen etc. benötigt wird. In Hochgeschwindigkeitsroutern und -switches liegt das Processing Delay in der Größenordnung von Mikrosekunden oder darunter.

Die gesamte Zeit die ein Datenpaket für den Weg von einem Sender zu einem Empfänger benötigt ist also die Summe aus dem Transmission Delay, der Signallaufzeit, dem Queuing Delay und dem Processing Delay. Je häufiger ein Signal von einem Switch oder einem anderen Netzwerkgerät empfangen, ausgewertet und/oder bearbeitet und erst danach weitergesendet wird, desto länger benötigt es um bei dem eigentlichen Empfänger anzukommen.

Einige der Verzögerungen sind in vielen Netzwerken vergleichsweise kurz und vor allem weitgehend konstant, bspw. die Signallaufzeit, die sich nur ändert, wenn sich die Entfernung zwischen Sender und Empfänger ändert, oder wenn sich die Route einer Verbindung so ändert, dass die Gesamtstrecke länger oder kürzer wird. In einem Netzwerk mit Teilstrecken bekannter Länge ist auch bei wechselnden Routen aus den bekannten Distanzen einzelner Segmente der Route die Signallaufzeit vergleichsweise genau bestimmbar.

Andere Verzögerungen sind weniger konstant und auch nicht vorhersagbar, bspw. die Switch-Latenz, die u.a. stark von der Menge, ggf. der Priorität und von den Zeitpunkten der zu einem Zeitpunkt über eine physikalische Netzwerk-Schnittstelle zum Senden anstehenden Daten abhängt.

In vielen Netzwerken ist eine Synchronisierung der in den Netzwerkgeräten vorhandenen Zeitgeber erforderlich, insbesondere auch in Netzwerken von Fahrzeugen, wo die zeitlich synchronisierte Erfassung von Sensordaten für den sicheren Betrieb erforderlich ist. Fast alle in Fahrzeugen eingesetzten Ethernet-Kommunikationsnetzwerke nutzen dazu ein Protokoll zur Zeitsynchronisation, das eine in allen Netzwerkgeräten synchrone globale Zeitbasis des Netzwerks bereitstellt. Es wird erwartet, dass der Verbreitungsgrad zeitlich synchronisierter Netzwerkgeräte in Fahrzeugen und in anderen Anwendungsbereichen Zukunft weiter zunimmt.

Der IEEE 802.1AS-Standard, Version 2011, stellt ein solches Protokoll zur Zeitsynchronisation bereit, welches auch unter dem Akronym gPTP für "generalized Precision Time Protocol" bekannt ist. Ausgehend von einer sogenannten "besten Uhr" im Netzwerk, auch als Grandmaster oder Grandmaster Clock bezeichnet, wird eine Master-Slave-Uhrenhierarchie aufgebaut. Der Grandmaster stellt dabei die Zeitbasis für das Netzwerk bereit, auf die alle anderen Netzwerkgeräte des Netzwerks sich synchronisieren.

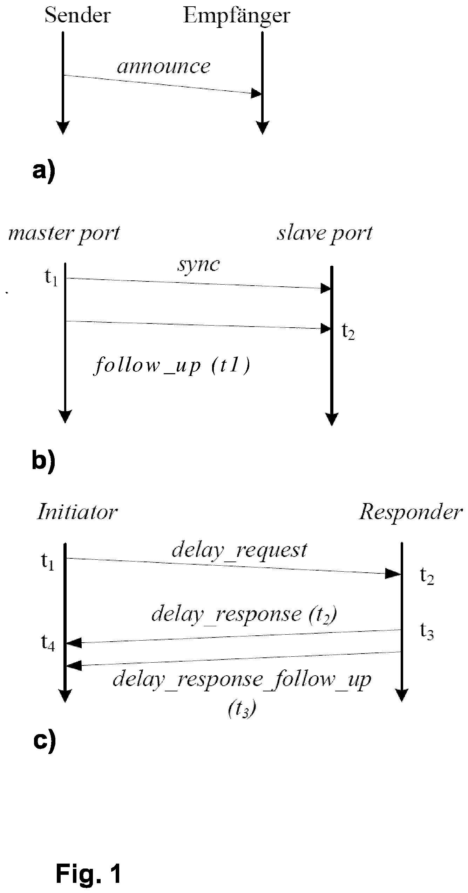

Die drei grundlegenden Funktionen des generalized Precision Time Protocols, Bestimmung der besten Uhr, Austausch von Zeitinformationen und Messung der Laufzeit auf einer Verbindungsleitung zwischen Nachbarknoten, sind in Figur 1 gezeigt.

Der Grandmaster wird mittels des sogenannten Best Master Clock Algorithmus (BMCA) bestimmt und innerhalb des Netzwerks bekanntgegeben. Dazu senden IEEE 802.1AS-fähige Netzwerkgeräte zyklisch Announce-Nachrichten mit Informationen über ihre interne Uhr an unmittelbar angeschlossene weitere Netzwerkgeräte. Die Informationen über die internen Uhren geben Aufschluss auf die Genauigkeit der jeweiligen Uhr, deren Bezug oder Zeitreferenz sowie andere Eigenschaften, anhand derer die beste Uhr in dem Netzwerk bestimmt werden kann. Eine solche Announce-Nachricht ist in Figur 1 a) beispielhaft dargestellt. Ein Empfänger einer solchen Announce-Nachricht vergleicht die empfangenen Informationen mit den Merkmalen seiner eigenen internen Uhr und evtl. bereits von einem anderen Port empfangenen Nachrichten mit Informationen zu Uhren anderer Netzwerkgeräte, und akzeptiert eine in einem anderen Netzwerkgerät befindliche Uhr, wenn diese bessere Uhrenparameter hat. Nach kurzer Zeit ist die beste Uhr in dem Netzwerk ermittelt, die dann der Grandmaster in dem Netzwerk wird, und wurde ein Zeitsynchronisations-Spannbaum aufgestellt. Jedem Port eines Netzwerkgeräts wird in diesem Zuge einer von vier Port-Zuständen zugewiesen. Der Zustand Master Port wird dem Port zugewiesen, der einen kürzeren Weg zum Grandmaster hat als sein Linkpartner. Der Zustand Slave wird dann zugeordnet, wenn an diesem Knoten noch kein anderer Port diesen Zustand besitzt. Disabled wählt derjenige Port, welcher dass PTP-Protokoll nicht vollständig unterstützen kann. Der Zustand passiv wird gewählt, wenn keiner der anderen drei Zustände zutrifft.

Ausgehend von dem Grandmaster werden Nachrichten zur Zeitsynchronisation über das Netzwerk verbreitet. Dazu dient der Sync_Follow_Up-Mechanismus, der in Figur 1 b) schematisch dargestellt ist. Die Master Ports senden zyklisch Sync- und Follow_Up- Nachrichten an den jeweils benachbarten Linkpartner. Wenn die Sync-Nachricht den Master Port verlässt, wird ein Zeitstempel generiert, welcher unmittelbar in einer darauffolgenden Follow_Up-Nachricht übertragen wird. Dieser Zeitstempel entspricht der aktuellen Uhrzeit des Grandmasters zum Sendezeitpunkt der Sync-Nachricht.

Ein Netzwerkgerät das eine Nachricht zur Zeitsynchronisation empfängt leitet diese nicht einfach weiter, sondern korrigiert die Zeitinformation um die zuvor ermittelte Laufzeit auf der Verbindung, über die es Nachrichten zur Zeitsynchronisation von einem direkt verbundenen Netzwerkgerät empfängt, sowie um die interne Bearbeitungsdauer, bevor es eine neue Nachricht zur Zeitsynchronisation mit der korrigierten Zeitinformation erstellt und weitersendet. Diese Korrektur erfolgt in sogenannten "time-aware" Systemen in jedem Netzwerkknoten, also auch in entsprechend eingerichteten Routern und Switches.

Zur Bestimmung der die Verzögerung zwischen zwei verbundenen Ports dient der sogenannte "Peer Delay Mechanismus", der beispielhaft in Figur 1 c) gezeigt ist. Ein Port, der Initiator, startet die Messung der Leitungsverzögerung, indem er eine Delay_Request-Nachricht an den mit ihm direkt verbundenen Port eines Netzwerkgeräts, den Responder, sendet und einen Ausgangszeitstempel mit der Zeit t₁ generiert. Dieser Ausgangszeitstempel bezeichnet einen Hardware-Zeitstempel, der so spät wie möglich vor dem tatsächlichen Senden der Nachricht zur Zeitsynchronisation über den des Ethernet-Transceiver geschrieben wird. Der Responder generiert beim Eintreffen der Nachricht zur Zeitsynchronisation einen Zeitstempel t₂. Als Antwort sendet der Responder eine Delay_Response-Nachricht. In dieser Nachricht überträgt er den Empfangs-Zeitstempel t₂ der Delay_Request-Nachricht. Verlässt diese Nachricht den Responder, so erzeugt dieser wiederum einen Zeitstempel t₃, welcher in einer unmittelbar darauffolgenden Delay _Response _Follow-Up-Nachricht versendet wird. Beim Empfang der Delay_Response-Nachricht beim Initiator generiert dieser einen Zeitstempel t₄. Der Initiator kann aus den vier Zeitstempeln t₁ bis t₄ die durchschnittliche Laufzeit auf der Kommunikationsstrecke errechnen.

Da die Laufzeit auf einer Verbindungsstrecke richtungsabhängig unterschiedlich sein kann, werden Delay_Request-Nachrichten zyklisch von beiden Kommunikationspartnern unabhängig voneinander versendet.

Bei der Uhrenhierarchie gemäß IEEE 802.1AS und dem darin festgelegten "generalized precision time protocol" (gPTP) stellt immer nur ein einziges Netzwerkgerät die beste Uhr des Netzwerkes bereit. Dieses Netzwerkgerät steuert und regelt somit die gesamte Zeit des Fahrzeugs. Alle anderen Uhren in Netzwerkgeräten des Netzwerkes richten sich ausschließlich nach dieser einen Uhr. Einige Fahrzeughersteller synchronisieren sogar Netzwerke anderer Standards, bspw. CAN, über diesen Ethernet-Zeitmaster, so dass fast allen Netzwerkgeräten des Fahrzeugs von dem den Grandmaster bereitstellenden Netzwerkgerät die Systemzeit mitgeteilt wird.

Die Grandmaster Clock sendet zyklisch Nachrichten zur Zeitsynchronisation an unmittelbar angeschlossene Netzwerkgeräte, welche die Zeitinformation um die zuvor bestimmte Laufzeit auf der Übertragungsstrecke und die interne Bearbeitungszeit korrigieren, bevor sie empfangene Nachrichten zur Zeitsynchronisation wiederum an unmittelbar angeschlossene weitere Netzwerkgeräte weitersenden. Die Korrekturen der Zeitinformation können nicht garantieren, dass tatsächlich jeder Zeitgeber eines Netzwerkgeräts absolut synchron mit der Grandmaster Clock läuft, weil es bei jeder Korrektur der Zeitinformation unweigerlich zu Abweichungen kommt, u.a. aufgrund des unterschiedlichen zeitlichen Drift der Zeitgeber sowie anderen Hardwareeigenschaften, welche zu Ungenauigkeiten bei der Bestimmung der Laufzeiten und Verzögerungen führen können und dergleichen. Mit jeder Weiterleitung einer Nachricht zur Zeitsynchronisation erhöht sich demnach die mögliche Abweichung der Zeitinformation von dem Referenzsignal der Grandmaster Clock, d.h. die Genauigkeit der Synchronisation nimmt mit jeder Weiterleitung ab.

In vielen Anwendungsfällen, u.a. auch in Fahrzeugen mit einem hohen Grad an Fahrerunterstützung durch entsprechende Systeme oder mit Systemen für das teil- oder hochautomatisierte Fahren, muss eine Vielzahl von innerhalb eines engen Zeitfensters erfassten Sensordaten gemeinsam verarbeitet werden, um entsprechende Ansteuersignale für Aktoren des Fahrzeugs abzuleiten. Auch für Dokumentationszwecke kann eine möglichst genaue Zeiterfassung von Sensordaten von großer Bedeutung sein, bspw. bei der Speicherung in Log-Dateien, durch deren Analyse Fehlfunktionen oder Fehlbedienungen rekonstruiert werden können. Letzteres ist für das Debugging in verteilten Systemen, aber insbesondere auch für Versicherungen und Strafverfolgungsbehörden von hohem Interesse. Daher ist eine sichere und vor allem möglichst präzise synchronisierte Bereitstellung der Zeitinformation unverzichtbar für eine sogenannte "harte" Echtzeitunterstützung. Je genauer die Synchronisation der Uhrzeit ist, desto besser sind die Ergebnisse damit verbundener Funktionen wie bspw. durch Sensorfusion.

Problematisch für eine genaue Zeitsynchronisation insbesondere dann, wenn ein Switch in einem server-basierten Steuergerät nicht IEEE 802.1AS-fähig ist, d.h. der Switch Nachrichten zur Zeitsynchronisation vor dem Weitersenden nicht um die Laufzeit des Signals vom Sender korrigieren kann, und vor allem nicht um das Switch-Delay. Die Signallaufzeit könnte bei räumlich nahe beieinander liegenden Sendern und Empfängern möglicherweise noch vernachlässigt werden, oder zwischen über einen nicht IEEE 802.1AS-fähigen Switch verbundenen Sendern und Empfängern statistisch ermittelt werden. Die abhängig von dem über den Switch geleiteten Netzwerkverkehr durch Zwischenspeicherung anfallende Zeitverzögerung ist aber nicht oder nur unter großem Aufwand sinnvoll zu ermitteln, so dass die Zeitinformation in über derartige Switches geleitete Nachrichten zur Zeitsynchronisation eine erhebliche Ungenauigkeit aufweist.

Selbst in IEEE 802.1AS-fähigen Switches können bei der vor der Weiterleitung der Nachrichten zur Zeitsynchronisation nötigen Korrektur der Zeitinformation Abweichungen auftreten die, wenn sie auch im Einzelfall nur klein sind, sich bei jeder Weiterleitung zu einer immer größer werdenden möglichen Ungenauigkeit aufsummieren.

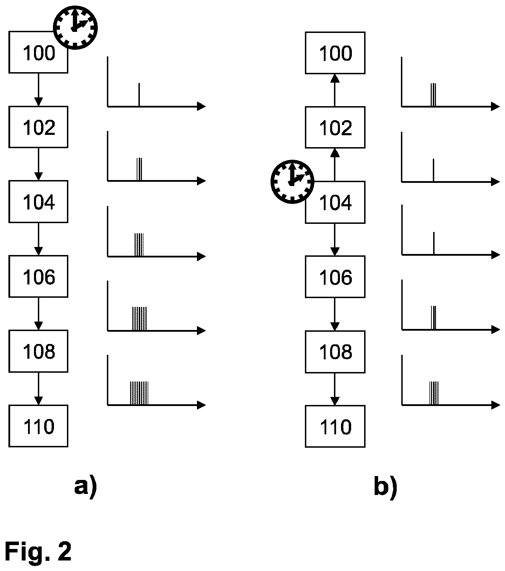

Figur 2 a) zeigt ein schematisches Beispiel der Änderung der möglichen Abweichung von Zeitinformationen in Netzwerkgeräten, die gemäß IEEE 802.1AS synchronisiert werden. In Figur 2 a) stellt Netzwerkgerät 100 die Grandmaster Clock bereit, und sendet die Nachrichten zur Zeitsynchronisation an Netzwerkgerät 102 weiter. Netzwerkgerät 102 korrigiert die Zeitinformation bevor es eine entsprechende Nachricht zur Zeitsynchronisation an Netzwerkgerät 104 sendet. Bei der Korrektur nutzt Netzwerkgerät 102 die zuvor ermittelte Laufzeit auf der Verbindung mit Netzwerkgerät 100 sowie Information über eine interne Verzögerung, die u.a. von der Implementierung der Zeitsynchronisation und Hardwareeigenschaften des Netzwerkgeräts abhängt. Neben den Netzwerkgeräten ist ein Zeitdiagramm gezeigt, welches die von Netzwerkgerät 100 ausgesendete Zeit sowie die mögliche Abweichung nach jeder weiteren Übertragung darstellt. Nach der ersten Korrektur ist der ursprünglich einzelne Strich, der den Zeitpunkt der von Netzwerkgerät 100 gesendeten Nachricht zur Zeitsynchronisation darstellt, bereits nach links und rechts um weitere Striche ergänzt. Diese weiteren Striche deuten an, dass bei der Korrektur eine gewisse Abweichung vorliegen kann. Netzwerkgerät 102 leitet die mit einer gewissen ersten möglichen Abweichung behaftete Zeitinformation an Netzwerkgerät 104 weiter. Netzwerkgerät 104 korrigiert wiederum die empfangene Zeitinformation, wobei erneut eine gewisse Abweichung bei der Korrektur nicht ausgeschlossen werden kann, und leitet diese Zeitinformation in einer Nachricht zur Zeitsynchronisation an Netzwerkgerät 106 weiter. Die erneut vergrößerte mögliche Abweichung der Zeitinformation von der tatsächlich in der Grandmaster Clock vorliegenden Zeit ist durch den gegenüber dem Netzwerkgerät 102 zugeordneten Zeitdiagramm breiteren möglichen Abweichungsbereich dargestellt. Die Richtung der Weiterleitungen der Nachrichten zur Zeitsynchronisation ist durch die Pfeile zwischen den Netzwerkgeräten angedeutet.

Mit jeder Korrektur und Weiterleitung erhöht sich also der mögliche Abweichungsbereich. Das bedeutet nicht, dass eine Abweichung stets am äußeren Rand des Abweichungsbereichs liegen muss, und sich Abweichungen immer weiter vergrößern; es kann durchaus auch eine - wenn auch nicht steuerbare - Korrektur in eine entgegengesetzte Richtung erfolgen, so dass die Zeit im letzten Netzwerkgerät der Kette genauer mit der Zeit der Grandmaster Clock übereinstimmt als die Zeit in einem näher an der Grandmaster Clock liegenden Netzwerkgerät. Da dies aber nicht vorhersehbar ist muss mit dem worst case gerechnet werden.

Eine kleinere Anzahl Weiterleitungen der Nachricht zur Zeitsynchronisation von einer Uhr, die nach dem BMCA nicht die beste Uhr des Netzwerks ist, kann daher in bestimmten Anwendungsfällen Vorteile ggü. einer Uhr haben, welche, wenn auch nur geringfügig, objektiv bessere Eigenschaften aufweist, deren Nachrichten zur Zeitsynchronisation aber eine größere Anzahl Weiterleitungen erfordern, um das gesamte Netzwerk zu durchlaufen. Dies u.a. auch deshalb, weil der Best Master Clock Algorithmus keine Bewertung des Gesamtsystems vornimmt oder vornehmen könnte.

Außerdem erhöht jede auf dem Pfad einer Nachricht vom Sender zu einem Empfänger liegende aktive Komponente das Risiko einer Unterbrechung des Pfads, was gerade für sicherheitsrelevante Kommunikation zwischen Netzwerkgeräten unerwünscht ist.

Neue server-basierte elektrische und elektronische Architekturen, die in vielen Bereichen der Industrie eingeführt werden, konzentrieren eine zunehmende Zahl von logischen und Steuerfunktionen in einer immer kleineren Zahl von Steuereinheiten. Diese Steuereinheiten, auch als Server oder Zentralrechner bezeichnet, umfassen nicht mehr nur einen einzigen Mikrocontroller oder Mikroprozessor wie ein klassischer Steuerrechner, sondern weisen eine Vielzahl von Mikrocontrollern, Mikroprozessoren, Systems-on-Chip (SoC) und dergleichen auf, welche zum Schutz vor Umwelteinflüssen und mechanischer Beschädigung in einem gemeinsam genutzten Gehäuse angeordnet sind. Im Folgenden werden diese Steuereinheiten als server-basierte Steuergeräte bezeichnet. Zur Verbindung der in dem gemeinsam genutzten Gehäuse angeordneten Funktionseinheiten können Ethernet-Netzwerke mit entsprechenden Switches vorgesehen sein. Dabei kann die Anbindung einzelner Funktionseinheiten an einen Port des Ethernet-Switches direkt erfolgen, d.h. ohne einen in eine entsprechende Buchse gesteckten Ethernet-Stecker, und entsprechend auch ohne eine für eine über eine Ethernet-Leitung erforderliche Wandlung des Signalpegels und andere Signalbearbeitung in einem sogenannten PHY-Baustein, der die Verbindung zum Physical Layer bildet. Eine solche Anbindung kann bspw. über eine sogenannte Backplane erfolgen, oder über entsprechende Kabelsätze, welche die elektrische Verbindung zwischen der Ethernet-Schnittstelle einer Funktionseinheit und einem Port eines Ethernet-Switches herstellen. Es ist auch denkbar, dass mehrere Funktionseinheiten und Ethernet-Switches auf derselben Leiterplatte angeordnet sind und direkt mit auf der Leiterplatte verlaufenden Leiterbahnen angebunden sind. Ein Anschluss über bekannte physikalische Ethernet-Anschlüsse und entsprechende Kabel ist natürlich auch möglich.

Die Anzahl der Ports der Ethernet-Switches kann abhängig von der Anzahl der in einem Gehäuse eines server-basierten Steuergeräts vereinten Funktionseinheiten 20 oder auch mehr betragen. Mindestens ein Port des oder der Ethernet-Switches ist aus dem Gehäuse herausgeführt und mit einem Netzwerk verbunden. Die aus dem Gehäuse herausgeführten Ports weisen über einen PHY-Baustein realisierte physikalische Schnittstellen auf, die eine Wandlung der Signalpegel und sonstige Signalaufbereitung übernehmen.

Der PHY Baustein stellt mechanische, elektrische und weitere funktionale Hilfsmittel zur Verfügung, um physische Verbindungen zu aktivieren bzw. zu deaktivieren, sie aufrechtzuerhalten und Bits darüber zu übertragen. Der Physical Layer wird deshalb auch als Bitübertragungsschicht bezeichnet. Geräte und Netzkomponenten, die der Bitübertragungsschicht zugeordnet werden, sind zum Beispiel Transceiver, Verstärker, Stecker und Buchse für das Netzwerkkabel. Auf der Bitübertragungsschicht wird die digitale Bitübertragung auf einer leitungsgebundenen oder leitungslosen Übertragungsstrecke bewerkstelligt. Die gemeinsame Nutzung eines Übertragungsmediums kann auf dieser Schicht durch statisches oder dynamisches Multiplexen erfolgen. Dies erfordert neben den Spezifikationen bestimmter Übertragungsmedien, zum Beispiel Kupferkabel, Lichtwellenleiter, Stromnetz, und der Definition von Steckverbindungen noch weitere Elemente. Darüber hinaus muss auf dieser Ebene gelöst werden, auf welche Art und Weise ein einzelnes Bit übertragen werden soll: In Rechnernetzen werden Informationen in Form von Bit- oder Symbolfolgen übertragen. In Kupferkabeln und bei Funkübertragung sind modulierte, hochfrequente, elektromagnetische Wellen die Informationsträger, in Lichtwellenleitern Lichtwellen einer oder mehrerer bestimmter Wellenlängen. Die Informationsträger können abhängig von der Modulation nicht nur zwei Zustände für null und eins annehmen, sondern gegebenenfalls weitaus mehr. Für jede Übertragungsart muss daher eine Codierung festgelegt werden. Die Anpassung der zu übertragenden Signale an das Übertragungsmedium kann eine nennenswerte Latenz mit sich bringen.

Die in einem Gehäuse einer Steuereinheit angeordneten Funktionseinheiten, von denen jede eine von anderen Funktionseinheiten unabhängig ausgeführte Soft- oder Firmware aufweisen kann, sind in der zuvor beschriebenen Art miteinander durch ein lokales Netzwerk verbunden und können eine gemeinsame Stromversorgung haben. Dabei ist in den einzelnen Funktionseinheiten keine Information vorhanden, anhand derer sie direkt ermitteln könnten, ob sie über einen PHY-Baustein an ein Netzwerk angeschlossen sind, oder dass sie in demselben Gehäuse wie andere Komponenten angeordnet sind.

Es ist leicht erkennbar, dass in einem server-basierten Steuergerät, in welcher eine größere Zahl von Funktionseinheiten gemeinsam untergebracht und über einen oder mehrere Switches miteinander verbunden sind, Nachrichten zur Zeitsynchronisation einer ungünstig platzierten Grandmaster Clock eine große und häufig nicht vorhersagbare Latenz erfahren, bevor sie überhaupt an das "externe" Netzwerk übergeben werden. Dies kann die Brauchbarkeit von an entfernteren Netzwerkgeräten des Netzwerks erfassten Daten einschränken, insbesondere wenn ein möglichst genauer Zeitpunkt der Erfassung oder eine mit anderen Netzwerkgeräten synchronisierte Erfassung der Daten für die Ergebnisse einer gemeinsamen Verarbeitung wichtig sind, die auch als Sensor Fusion bezeichnet wird. Relevanter Stand der Technik sind die folgenden Schriften. JEON YOUNGHWAN ET AL: "An efficient method of reselecting Grand Master in IEEE 802.1AS", THE 20TH ASIA-PACIFIC CONFERENCE ON COMMUNICATION (APCC2014), IEEE, 1. Oktober 2014 (2014-10-01), Seiten 303-308, DOI: 10.1109/APCC.2014.7091652.

GEORG GADERER ET AL: "Improving Fault Tolerance in High-Precision Clock Synchronization", IEEE TRANSACTIONS ON INDUSTRIAL INFORMATICS, IEEE SERVICE CENTER, NEW YORK, NY, US, Bd. 6, Nr. 2, 1. Mai 2010 (2010-05-01), Seiten 206-215, ISSN: 1551-3203, DOI: 10.1109/TII.2010.2044580.

EP 3 016 306 A1 (HYUNDAI MOTOR CO LTD [KR]) 4. Mai 2016 (2016-05-04).

DE 10 2013 224697 A1 (BOSCH GMBH ROBERT [DE]) 3. Juni 2015 (2015-06-03).

Es ist daher eine Aufgabe der Erfindung ein Verfahren und eine das Verfahren implementierende Vorrichtung anzugeben welche eine Optimierung der Zeitsynchronisation zwischen über ein Kommunikationsnetzwerk verbundenen Netzwerkgeräten bieten.

### ZUSAMMENFASSUNG DER ERFINDUNG

Diese Aufgabe wird durch das in Anspruch 1 angegebene Verfahren und das in Anspruch 13 angegebene serverbasierte Steuergerät gelöst. Ausgestaltungen und Weiterentwicklungen sind in jeweiligen abhängigen Ansprüchen angegeben.

Das erfindungsgemäße Verfahren zur Festlegung einer Grandmaster Clock, das in einem System miteinander über ein erstes Netzwerk oder mehrere erste Teil-Netzwerke vernetzter Steuergeräte ausgeführt wird, umfasst zunächst das Ermitteln der besten Uhr des Gesamt-Netzwerks. Dies kann bspw. durch Ausführen des BMCA gemäß IEEE 802.1AS erfolgen.

Mindestens eines der miteinander vernetzten Steuergeräte ist ein server-basiertes Steuergerät, welches mehrere als Quelle der Grandmaster Clock geeignete, innerhalb des server-basierten Steuergeräts mittels eines zweiten Netzwerks über Switches kommunikativ verbundene Funktionseinheiten in einer physischen Einheit vereint. Das server-basierte Steuergerät ist über eine oder mehrere Netzwerk-Schnittstellen mit dem ersten Netzwerk oder mehreren ersten Teil-Netzwerken verbunden. Die eine oder mehreren Netzwerk-Schnittstellen können von einem Switch des server-basierten Steuergeräts oder von einer der Funktionseinheiten ausgehen. Das erste Netzwerk oder die ersten Teil-Netzwerke liegen also außerhalb und das zweite Netzwerk liegt innerhalb des server-basierten Steuergeräts.

Wenn die zuvor ermittelte beste Uhr des Gesamt-Netzwerks in einem server-basierten Steuergerät liegt umfasst das Verfahren außerdem das Ermitteln der Distanzen ausgewählter Funktionseinheiten, welche als Quelle der Grandmaster Clock geeignet sind, zu ausgewählten aktiven Netzwerk-Schnittstellen, welche das server-basierte Steuergerät mit dem ersten Netzwerk oder mehreren ersten Teil-Netzwerken verbinden.

Die grundsätzliche Eignung als Quelle der Grandmaster Clock kann bspw. durch Analyse der Announce-Nachrichten des PTP-Protokolls ermittelt werden. Eine weitere Möglichkeit besteht darin, den jeweiligen Nachbarkomponenten PDelay-Nachrichten zuzusenden bzw. eine Messung der Laufzeitverzögerung der Verbindung zu starten. Aus dem Ergebnis dieser Messungen kann der Pfad der Nachrichten zur Zeitsynchronisation ermittelt sowie erkannt werden, welche Funktionseinheit überhaupt ein Zeitsynchronisationsprotokoll unterstützt bzw. ausführen kann.

Ausgewählte Funktionseinheiten können alle als Quelle der Grandmaster Clock geeigneten Funktionseinheiten des server-basierten Steuergeräts umfassen, d.h. alle Funktionseinheiten, die einen internen Zeitgeber aufweisen und dazu eingerichtet werden können, für die Bereitstellung der Grandmaster Clock nötige Computerprogramminstruktionen auszuführen. Alternativ können ausgewählte Funktionseinheiten diejenigen Funktionseinheiten des server-basierten Steuergeräts umfassen, deren Zeitgeber vorbestimmte Mindestanforderungen erfüllen. Z.B. können nur diejenigen Funktionseinheiten in Betracht gezogen werden, deren Zeitgeber gleichwertige oder nur geringfügig schlechtere Uhrenparameter haben als die durch den Best Master Clock Algorithmus ermittelte Grandmaster Clock. In einer weiteren Alternative können ausgewählte Funktionseinheiten diejenigen Funktionseinheiten des server-basierten Steuergeräts umfassen, welche die Nachrichten zur Zeitsynchronisation der durch den Best Master Clock Algorithmus ermittelten Grandmaster Clock zu einer der ausgewählten aktiven Netzwerk-Schnittstellen weiterleiten. In letzterem Fall können zur Ermittlung der ausgewählten Funktionseinheiten bspw. Pfadangaben aus den Synchronisationsnachrichten ausgelesen werden oder, wenn der Pfad bekannt sein sollte, kann diese Information aus der Systemkonfiguration bekannt sein.

Ausgewählte aktive Netzwerk-Schnittstellen können alle Netzwerk-Schnittstellen des server-basierten Steuergeräts zu dem ersten Netzwerk oder den ersten Teil-Netzwerken umfassen, über die zwischen einer Inbetriebnahme und einer Beendigung des Betriebs des Systems zumindest sporadisch Daten gesendet oder empfangen werden, d.h. über die zumindest ein weiteres Steuergerät zumindest zeitweise erreichbar ist. Alternativ können ausgewählte aktive Netzwerk-Schnittstellen diejenigen Netzwerk-Schnittstellen umfassen, die das server-basierte Steuergerät mit ersten Teil-Netzwerken verbinden, an welche Steuergeräte angeschlossen sind, die eine zeitkritische Anwendung ausführen. Steuergeräte die eine zeitkritische Anwendung ausführen können dies bspw. durch entsprechende Nachrichten bei der Initialisierung des Netzwerks anzeigen.

Die Distanz einer ausgewählten Funktionseinheit zu einer ausgewählten Netzwerk-Schnittstelle kann bspw. durch die Anzahl der Weiterleitungen von Paketen über dazwischenliegende Funktionseinheiten oder Switches oder dergleichen gekennzeichnet sein, oder durch die Länge einer Kommunikationsleitung, d.h. die Signallaufzeit auf der Kommunikationsleitung. Die Distanz kann auch einen Faktor aufweisen, der bspw. eine Fluktuation einer Verzögerung in Sende- und/oder Empfangsbausteinen zwischen zwei Funktionseinheiten beschreibt, und der bei größerer Fluktuation die Distanz für die Zwecke des erfindungsgemäßen Verfahrens virtuell vergrößert. Eine Netzwerk-Schnittstelle, die eine Verbindung zu dem ersten Netzwerk oder einem der ersten Teil-Netzwerke herstellt, kann bspw. über Laufzeitmessungen erkannt werden. Dabei wird ausgenutzt, dass die Entfernungen zwischen Funktionseinheiten innerhalb des server-basierten Steuergeräts üblicherweise erheblich kürzer sind als die Verbindungen der Netzwerk-Schnittstellen mit über Netzwerkkabel an das erste Netzwerk oder ein erstes Teil-Netzwerk angeschlossenen Steuergeräten. Die Signallaufzeit auf dem Kabel ist erkennbar länger. Außerdem können Komponenten, mittels derer die Netzwerk-Schnittstelle das erste Netzwerk oder ein erstes Teil-Netzwerk anbindet, zusätzliche Verzögerungen hinzufügen, bspw. die sog. PHY-Latenz, die bei Verbindungen innerhalb des server-basierten Steuergeräts nicht auftreten.

Sofern diese Information nicht in den Funktionseinheiten eines server-basierten Steuergeräts als Konfigurationsinformation oder dergleichen vorliegt können die Steuergeräte eines Netzwerks auch Anhand der Messung der Laufzeiten zwischen direkt miteinander verbundenen Ports feststellen, ob sie Funktionseinheiten eines server-basierten Steuergeräts sind. Zwischen direkt über eine Leiterplatte oder eine Backplane "phy-less" miteinander verbundenen Funktionseinheiten werden eine deutlich kleinere Latenz aufweisen als Steuergeräte, welche über einen PHY-Baustein und ein längeres Verbindungsmedium angeschlossen sind, z.B. ein Netzwerkkabel.

Das erfindungsgemäße Verfahren umfasst ferner das Bestimmen der mittleren Distanz zu allen ausgewählten Netzwerk-Schnittstellen für jede der ausgewählten Funktionseinheiten, und das Festlegen derjenigen ausgewählten Funktionseinheit, welche die kleinste mittlere Distanz zu allen ausgewählten Netzwerk-Schnittstellen aufweist, als festgelegte Grandmaster Clock für das Gesamt-Netzwerk. Die festgelegte Grandmaster Clock dient dann als Grandmaster Clock für das erste Netzwerk oder die ersten Teil-Netzwerke und sendet entsprechende Nachrichten zur Zeitsynchronisation in diese Netzwerke.

Die kleinste mittlere Distanz kann bspw. durch Summieren der Distanzen zu den ausgewählten Netzwerk-Schnittstellen und das Teilen der Summe durch die Anzahl der ausgewählten Netzwerk-Schnittstellen gebildet werden. Auch eine Gewichtung der Distanzen einzelner ausgewählter Netzwerk-Schnittstellen nach Genauigkeitsanforderungen der darüber verbundenen Steuergeräte ist denkbar.

Bei Ausführungen des erfindungsgemäßen Verfahrens kann die festgelegte Grandmaster Clock sich innerhalb des server-basierten Steuergeräts mit der durch den Best Master Clock Algorithmus ermittelten Grandmaster Clock synchronisieren. Die durch den Best Master Clock Algorithmus ermittelte Grandmaster Clock kann dabei eine Basis-Zeitdomäne errichten, die zumindest für die Funktionseinheit gilt, welche als festgelegte Grandmaster Clock die Nachrichten zur Zeitsynchronisation in das erste Netzwerk oder die ersten Teil-Netzwerke sendet. Nachrichten zur Zeitsynchronisation dieser Basis Zeitdomäne müssen nicht nach außerhalb des server-basierten Steuergeräts weitergeleitet werden. Die festgelegte Grandmaster Clock kann dabei zu dem ersten Netzwerk oder den ersten Teil-Netzwerken hin die Domänennummer 0 einer Grandmaster Clock gemäß IEEE 802.1AS-Standard nutzen und ihre eigene Identifikation senden. Da alle Funktionseinheiten des server-basierten Steuergeräts eine Software aufweisen, die dieses Vorgehen toleriert bzw. unterstützt, besteht zu dem ersten Netzwerk oder den ersten Teil-Netzwerken weiterhin Kompatibilität mit standardisierten Verfahren und Protokollen zur Zeitsynchronisation.

Eine Funktionseinheit eines zur Ausführung zumindest von Teilen des vorstehend beschriebenen Verfahrens eingerichteten server-basierten Steuergeräts umfasst einen Mikroprozessor, flüchtigen und nichtflüchtigen Speicher, eine synchronisierbaren Zeitgeber und mindestens eine Kommunikationsschnittstelle, welche über eine oder mehrere Datenleitungen oder -busse kommunikativ miteinander verbunden sind. Die Kommunikationsschnittstelle verbindet die Funktionseinheit mit anderen in dem server-basierten Steuergerät angeordneten Funktionseinheiten. Diese Verbindung kann direkt erfolgen oder über Router bzw. Switches.

Ein zur Ausführung von Aspekten des vorstehend beschriebenen Verfahrens eingerichtetes server-basierten Steuergerät umfasst entsprechend mehrere über ein zweites Netzwerk miteinander kommunikativ verbundene Funktionseinheiten. Das zweite Netzwerk kann einen oder mehrere Switches umfassen. Eine Netzwerk-Schnittstelle einer Funktionseinheit oder eines Switches verbindet das zweite Netzwerk mit einem ersten Netzwerk welches außerhalb des server-basierten Steuergeräts liegt. Es ist auch denkbar, dass mehrere Netzwerk-Schnittstellen von Funktionseinheiten oder Switches das zweite Netzwerk mit jeweils mit einem von mehreren ersten Teil-Netzwerken verbinden, welche außerhalb des server-basierten Steuergeräts liegen. Zwei oder mehr der Funktionseinheiten oder Switches sind dazu eingerichtet, zumindest Teile des vorstehend beschriebenen Verfahrens auszuführen.

Die in dem vorliegenden Verfahren vorgeschlagene Verlagerung der Grandmaster Clock näher an eine Schnittstelle eines server-basierten Steuergeräts zu einem daran angeschlossenen Netzwerk kann eine höhere Genauigkeit der Zeitsynchronisation in bestimmten Anwendungsfällen erreichen, was vor allem in Fahrzeugnetzwerken vorteilhaft sein kann, bspw. wenn bestimmte Teil-Netzwerke größere Anforderungen an die Genauigkeit der Zeitsynchronisation haben als andere Teil-Netzwerke. Dies ist in Figur 2 b) im Vergleich zu dem weiter oben beschriebenen Beispiel aus Figur 2 a) leicht erkennbar: Angenommen Netzwerkgerät 104 ist dasjenige Netzwerkgerät, das eine Netzwerk-Schnittstelle zu einem außerhalb eines server-basierten Steuergeräts liegenden Netzwerk bereitstellt, in dem Steuergeräte verbunden sind, welche besonderes hohe Anforderungen an die Genauigkeit der Zeitsynchronisation stellen. Die Zuweisung der Grandmaster Clock zu Netzwerkgerät 104 führt nun dazu, dass die Zahl der Weiterleitungen von Nachrichten zur Zeitsynchronisation in das externe Netzwerk kleiner ist. Weiterleitungen innerhalb des server-basierten Steuergeräts können dort zwar auch zu Verzögerungen führen, aber die Zeitstempel von Daten der Netzwerkgeräte 106, 108 oder 110 weisen kleinere maximal mögliche Abweichungen voneinander auf als in dem mit Bezug auf Figur 2 a) geschilderten Beispiel. Es ist deutlich erkennbar, dass die neben den jeweiligen Netzwerkgeräten gezeigten maximalen Abweichungsbereiche kleiner geworden sind. Ausgehend von Netzwerkgerät 104 wird eine Zeitinformation höchstens drei Mal korrigiert, während sie bei dem in Figur 2 a) gezeigten System bis zu fünf Mal korrigiert wird.

Auch in vernetzten Systemen, in denen Teil-Netzwerke dynamisch aktiviert oder deaktiviert werden kann - bei ansonsten unveränderter durch den BMCA ermittelter Grandmaster Clock - die Verlagerung der Grandmaster Clock näher an eine Schnittstelle eines server-basierten Steuergeräts zu einem daran angeschlossenen Netzwerk Vorteile bringen. Wenn bspw. ein an eine erste Netzwerk-Schnittstelle einer ersten Funktionseinheit des server-basierten Steuergeräts angebundenes Teil-Netzwerk mit hohen Anforderungen an die Genauigkeit der Zeitsynchronisation deaktiviert wird kann eine Verlagerung der Grandmaster Clock innerhalb des server-basierten Steuergeräts näher an eine zweite Netzwerk-Schnittstelle, über die ein anderes, weiterhin aktives Teil-Netzwerk angebunden ist für dieses Teil-Netzwerk eine bessere Genauigkeit der Zeitsynchronisation bieten. Das Gleiche gilt für den Fall, dass eine Anwendung oder Funktion mit hohen Anforderungen an die Genauigkeit der Zeitsynchronisation zwischen in unterschiedlichen Teil-Netzwerken angebundenen Steuergeräten verschoben wird. In diesem Fall kann es vorteilhaft sein, wenn die Grandmaster Clock innerhalb eines server-basierten Steuergeräts näher an die Netzwerk-Schnittstelle verlegt wird, an welche das die Anwendung oder Funktion ausführende Steuergerät angeschlossen ist.

Das erfindungsgemäße Verfahren nutzt dabei standardisierte Verfahren zur Zeitsynchronisation, so dass jegliche Interaktion mit anderen Netzwerkgeräten standardkonform erfolgen kann. Änderungen an der Zeitsynchronisation durch das erfindungsgemäße Verfahren finden nur innerhalb eines zum Netzwerk hin geschlossenen Steuergeräts statt, die als eine Einheit entwickelt ist, und deren Softwarekomponenten so ggf. gleich bei der Entwicklung angepasst und getestet werden können. Änderungen an der Hardware oder zusätzliche Komponenten sind dabei nicht erforderlich.

Die Verlagerung hat außerdem den Vorteil, dass die Wahrscheinlichkeit für einen Ausfall der Zeitsynchronisation durch eine innerhalb des server-basierten Steuergeräts liegende Grandmaster Clock verringert wird, weil die Nachrichten zur Zeitsynchronisation über eine kleinere Zahl von aktiven Komponenten geführt werden, bevor sie in das erste Netzwerk gelangen.

Bei einer geeigneten Priorisierung von an bestimmten Teil-Netzwerken angebundenen Steuergeräten bzw. von diesen bereitgestellten Funktionen oder Anwendungen kann für diese eine bessere Genauigkeit der Zeitsynchronisation erzielt werden. Insbesondere die Fusionierung von Daten unterschiedlicher Sensoren, bspw. Kamera und Radar oder Lidar, kann hiermit verbessert werden.

Während der Ausführung des vorliegenden Verfahrens gewonnene Erkenntnisse wie bspw. Information darüber, welche Funktionseinheiten der Server-Einheit, die sich ja ebenfalls wie andere Steuergeräte im Netzwerk verhalten, sich innerhalb eines Gehäuses befinden und welche über eine Kabelverbindung angeschlossen sind, lassen sich auch zur effizienten Verbesserung der Systemsicherheit nutzen. Eine Kabelverbindung ist deutlich einfacher durch Überwachen der Signale abzuhören als eine Leitung auf oder innerhalb einer Leiterplatte, insbesondere wenn das unbefugte Öffnen des Gehäuses durch geeignete Vorkehrungen verhindert oder zumindest erkannt wird. Diese Information kann bspw. dazu genutzt werden, bevorzugt auf denjenigen Netzwerkgeräten entsprechende Switch zur Erkennung eines unbefugt zwischengeschalteten Netzwerkgeräts auszuführen, die auch tatsächlich frei zugängliche Schnittstellen oder Kommunikationsverbindungen aufweisen. So können wertvolle Rechnerressourcen eingespart werden.

Die Distanz eines Ports einer Funktionseinheit eines server-basierten Steuergeräts zu einer Netzwerk-Schnittstelle, die eine Verbindung zu einem externen Netzwerk herstellt kann als Abstandskennzahl in einer Topologiekarte eines Netzwerks gespeichert werden. Einem Port bzw. einer Netzwerk-Schnittstelle, der bzw. die direkt mit dem externen Netzwerk verbunden ist, kann bspw. der Abstand 0 zugewiesen werden, und weiter entfernt liegenden Ports bzw. Schnittstellen innerhalb des server-basierten Steuergeräts werden entsprechend inkrementell höhere Abstände zugewiesen. Sofern eine Topologiekarte eines Systems vorliegt kann die Abstandskennzahl zur erfindungsgemäßen Positionierung der Grandmaster Clock genutzt werden. Die Abstandskennzahl kann auch bei der Ermittlung von Ausfallwahrscheinlichkeiten und Ungenauigkeiten der Zeitsynchronisation genutzt werden.

### KURZE BESCHREIBUNG DER ZEICHNUNG

Im Folgenden wird die Erfindung mit Bezug auf die Zeichnung exemplarisch erläutert. In der Zeichnung zeigt:
- Fig. 1: Nachrichtenflüsse gemäß IEEE 802.1AS-Standard,
- Fig. 2: schematische Beispiele der Änderung der möglichen Abweichung von Zeitinformationen in Netzwerkgeräten, die gemäß IEEE 802.1AS synchronisiert werden,
- Fig. 3: ein beispielhaftes Blockschaltbild eines Systems mit einem server-basierten Steuergerät und Teil-Netzwerken,
- Fig. 4: das System aus Figur 3 nach der Durchführung des BMCA,
- Fig. 5: das System aus Figur 3 nach der erfindungsgemäßen Verlagerung der Grandmaster Clock innerhalb des server-basierten Steuergeräts gemäß einem ersten Aspekt der Erfindung,
- Fig. 6: das System aus Figur 3 nach der erfindungsgemäßen Verlagerung der Grandmaster Clock innerhalb des server-basierten Steuergeräts gemäß einem zweiten Aspekt der Erfindung,
- Fig. 7: ein schematisches Flussdiagramm eines Aspekts des erfindungsgemäßen Verfahrens, und
- Fig. 8: ein schematisches Blockschaltbild einer Funktionseinheit eines das Verfahren implementierenden server-basierten Steuergeräts.

Gleiche oder ähnliche Elemente können in den Figuren mit denselben Bezugszeichen referenziert sein.

### BESCHREIBUNG VON AUSFÜHRUNGSBEISPIELEN

Die Figuren 1 und 2 wurden bereits weiter oben beschrieben und werden daher nicht erneut erörtert.

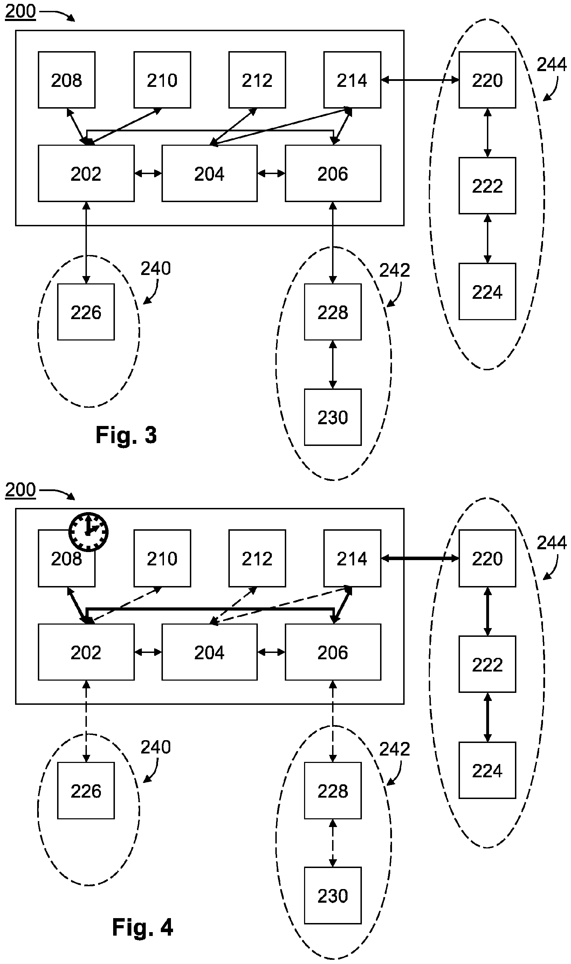

Figur 3 zeigt ein beispielhaftes Blockschaltbild eines Systems mit einem server-basierten Steuergerät 200 und Teil-Netzwerken 240, 242, 244. Das server-basierte Steuergerät 200 umfasst mehrere Funktionseinheiten 208, 210, 212, 214, welche mit Netzwerk-Switches 202, 204 und 206 verbunden sind. Die Netzwerk-Switches 202, 204 und 206 sind untereinander verbunden, sodass innerhalb des server-basierten Steuergeräts ein internes Teil-Netzwerk besteht, welches die Funktionseinheiten 208, 210, 212, 214 und die Netzwerk-Switches 202, 204 und 206 miteinander verbindet. Eine Funktionseinheit kann dabei neben einer oder mehreren Netzwerk-Schnittstellen einen Mikrocontroller bzw. Mikroprozessor und zugehörigen Speicher umfassen und eine programmgesteuerte Funktion ausführen.

Eine Funktionseinheit kann mit einem Netzwerk-Switch verbunden sein, wie bspw. Funktionseinheit 208 und Netzwerk-Switch 202, oder Funktionseinheit 212 und Netzwerk-Switch 204, eine Funktionseinheit kann aber auch mit zwei Netzwerk-Switches verbunden sein, wie bspw. Funktionseinheit 214 und Netzwerk-Switch 206.

Ein oder mehrere Netzwerk-Switches können Netzwerk-Schnittstellen aufweisen, welche das interne Teil-Netzwerk mit außerhalb des server-basierten Steuergeräts liegenden Teil-Netzwerken verbinden, z.B. die Netzwerk-Switches 202 und 206.

Eine Funktionseinheit kann auch selbst eine Netzwerk-Schnittstelle aufweisen, die ein außerhalb des server-basierten Steuergeräts liegendes Teil-Netzwerk anbindet, wie bspw. Funktionseinheit 214, an die das Teil-Netzwerk 244 angeschlossen ist. Funktionseinheit 214 kann dabei die Verbindung zu dem internen Teil-Netzwerk des server-basierten Steuergeräts herstellen.

Teil-Netzwerk 240 umfasst ein Steuergerät 226, Teil-Netzwerk 242 umfasst die Steuergeräte 228 und 230, und Teil-Netzwerk 244 umfasst die Steuergeräte 220, 222, 224. Steuergeräte 220, 222, 224, 226, 228 und 230 können bspw. Sensoren, Aktoren oder weitere server-basierte Steuergeräte sein.

Figur 4 zeigt das System aus Figur 3 nach der Durchführung des BMCA. Funktionseinheit 208 stellt die Grandmaster Clock des Systems bereit, angedeutet durch das Uhrensymbol. Bei der Synchronisation der Zeitgeber in den jeweiligen Steuergeräten des Systems werden die Nachrichten zur Zeitsynchronisation bis zu sechs Mal korrigiert und weitergeleitet: Zunächst wird von der Grandmaster Clock in Funktionseinheit 208 eine Nachricht zur Zeitsynchronisation an Switch 202 gesendet. Switch 202 korrigiert die Zeitinformation ein erstes Mal, bevor es seinerseits eine Nachricht zur Zeitsynchronisation an Switch 206 sendet. Switch 206 korrigiert die Zeitinformation ein zweites Mal, bevor es eine Nachricht zur Zeitsynchronisation an Funktionseinheit 214 sendet. Funktionseinheit 214 korrigiert die Zeitinformation ein drittes Mal, bevor es eine Nachricht zur Zeitsynchronisation an Steuergerät 220 sendet. Steuergerät 220 korrigiert die Zeitinformation ein viertes Mal, bevor es eine Nachricht zur Zeitsynchronisation an Steuergerät 222 sendet. Schließlich korrigiert Steuergerät 222 die Zeitinformation ein fünftes Mal, bevor es eine Nachricht zur Zeitsynchronisation an Steuergerät 224 sendet. Steuergerät 224 wird selbst eine sechste Korrektur der Zeitinformation vornehmen, auch wenn es die Nachricht zur Zeitsynchronisation nicht weiterleitet. Der Weg der Nachricht zur Zeitsynchronisation ist mit den durchgezogenen Pfeilen dargestellt.

Es ist leicht erkennbar, dass die mögliche Abweichung der Zeitinformation in Steuergerät 224 am größten ist; zumindest ist die Unsicherheit über die Abweichung für dieses Steuergerät am größten. In Systemen ist es häufig so, dass gerade Sensoren an den äußersten Enden eines Netzwerks angeordnet sind und demnach die den erfassten Messwerten zugeordneten Zeitstempel eine hohe mögliche Abweichung aufweisen können. Um die größte mögliche Abweichung zu verringern wird erfindungsgemäß ermittelt, ob eine andere Funktionseinheit oder ein Switch innerhalb des server-basierten Steuergeräts 200 als Grandmaster Clock geeignet ist und außerdem noch näher an einer Schnittstelle zu externen Teilnetzwerken liegt.

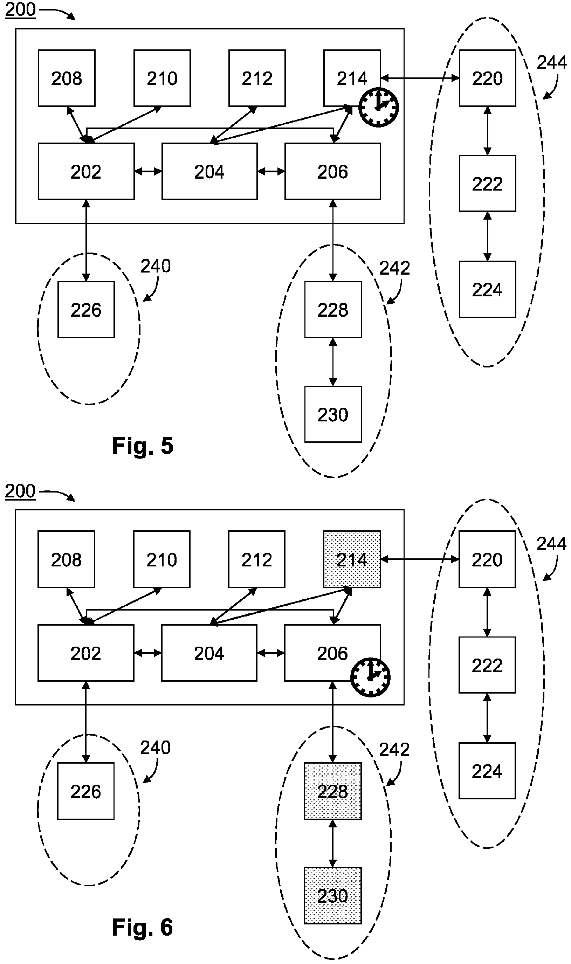

Figur 5 zeigt das System aus Figur 3 nach der Ermittlung einer Funktionseinheit innerhalb des server-basierten Steuergeräts 200, welche die Bedingungen erfüllt, und der Verlagerung der Grandmaster Clock innerhalb des server-basierten Steuergeräts 200 gemäß einer ersten Ausführung der Erfindung. In diesem Beispiel ist dies Funktionseinheit 214, die zum einen eine eigene Netzwerk-Schnittstelle zu einem externen Teilnetzwerk hat, und zum anderen in Bezug auf alle anderen Switches, Funktionseinheiten und Steuergeräte des Systems die kleinstmögliche Anzahl an Weiterleitungen bzw. Korrekturen der Nachricht zur Zeitsynchronisation benötigt. In dem in der Figur gezeigten Beispiel sind dies höchstens drei.

Figur 6 zeigt das System aus Figur 3 nach der erfindungsgemäßen Verlagerung der Grandmaster Clock innerhalb des server-basierten Steuergeräts 200 gemäß einer zweiten Ausführung der Erfindung. Bei diesem Beispiel haben die Steuergeräte 228 und 230 besonders hohe Anforderungen an die Zeitsynchronisation. Netzwerk-Switch 206 ist selbst dazu geeignet, die Grandmaster Clock bereitzustellen. Eine Verlagerung der Grandmaster Clock auf Netzwerk-Switch 206 bietet die kleinste mögliche Anzahl von Weiterleitungen in Bezug auf die Steuergeräte, die die hohen Anforderungen stellen, nämlich höchstens zwei, und hat auch für die anderen Funktionseinheiten und Steuergeräte immer noch eine vergleichsweise kleine Anzahl von Weiterleitungen.

Zusätzlich kann eine Verarbeitung der von den Steuergeräten 228 und 230 kommenden Daten in die Funktionseinheit 214 verlagert werden, so dass auch die Weiterleitung der Daten mit möglichst wenigen Zwischenstationen erfolgen kann.

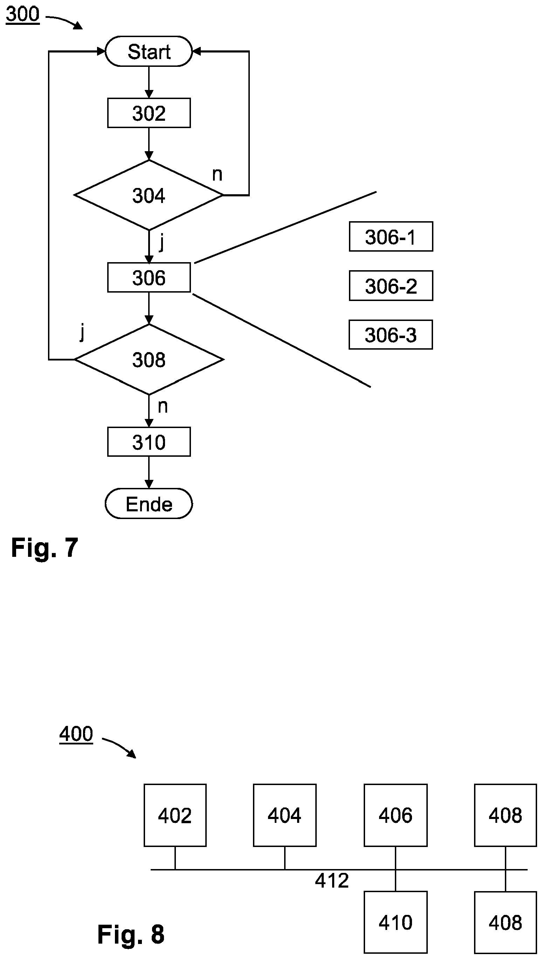

Figur 7 zeigt ein Flussdiagramm eines beispielhaften erfindungsgemäßen Verfahrens 300. In Schritt 302 wird zunächst die beste Uhr des Netzwerks bestimmt, z.B. durch Anwendung des Best Master Clock Algorithmus gemäß IEEE 802.1AS. In Schritt 304 wird überprüft, ob die Grandmaster Clock innerhalb des server-basierten Steuergeräts liegt. Wenn dies nicht der Fall ist, "n"-Zweig von Schritt 304, wird das Verfahren beendet. Das Verfahren kann bei der nächsten Ausführung des BMCA erneut gestartet werden. Wenn die Grandmaster Clock innerhalb des server-basierten Steuergeräts liegt, "j"-Zweig von Schritt 304, wird in Schritt 306 die Funktionseinheit innerhalb des server-basierten Steuergeräts, welche als Grandmaster Clock geeignet ist und welche zu allen ausgewählten Netzwerk-Schnittstellen die kleinste mittlere Distanz aufweist. Falls die in Schritt 302 bestimmte Grandmaster Clock von der in Schritt 306 ermittelten Funktionseinheit bereitgestellt wird, "j"-Zweig von Schritt 308, wird das Verfahren beendet. Anderenfalls, "n"-Zwei von Schritt 308, wird in Schritt 310 die Grandmaster Clock zu der in Schritt 306 ermittelten Funktionseinheit verschoben, und das Verfahren wird beendet. Das Verfahren kann bei der nächsten Ausführung des BMCA erneut gestartet werden.

Schritt 306 kann einen Schritt 306-1 umfassen, in dem Funktionseinheiten ausgewählt werden, welche für eine Verschiebung der Grandmaster Clock in Frage kommen könnten. Dies kann eine Prüfung der Uhrenparameter der in Frage kommenden Funktionseinheiten und einen Vergleich mit Mindestanforderungen der Uhrenparameter umfassen. Die Uhrenparameter sind z.B. in Announce-Nachrichten des gPTP-Protokolls enthalten.

Schritt 306 kann außerdem einen Schritt 306-2 umfassen, in welchem die Distanzen von ausgewählten Funktionseinheiten zu ausgewählten aktiven Netzwerk-Schnittstellen ermittelt werden, welche das server-basierte Steuergerät mit einem externen Netzwerk oder Teil-Netzwerk verbinden. Dazu können alle aktiven Netzwerk-Schnittstellen bestimmt werden. Aktive Netzwerk-Schnittstellen können bspw. über Laufzeitmessungen von Nachrichten zwischen jeweils zwei benachbarten Netzwerkknoten ermittelt werden; wenn zwischen zwei Netzwerkknoten eine gegenüber anderen Paaren von Netzwerkknoten signifikant erhöhte Laufzeit gemessen wird kann vermutet werden, dass die Verbindung nicht innerhalb eines server-basierten Steuergeräts liegt und daher eine Netzwerk-Schnittstelle zu einem außerhalb des server-basierten Steuergeräts liegenden Teil-Netzwerks ist.

Schritt 306 kann ferner einen Schritt 306-3 umfassen, in welchem die zuvor ermittelte Funktionseinheit mit der kleinsten mittleren Distanz zu allen ausgewählten Netzwerk-Schnittstellen als festgelegte Grandmaster Clock festgelegt wird.

Figur 8 zeigt ein exemplarisches Blockdiagramm eines zur Ausführung des erfindungsgemäßen Verfahrens eingerichteten Netzwerkgeräts 400. Das Netzwerkgerät 400 umfasst neben einem Mikroprozessor 402 flüchtigen und nichtflüchtigen Speicher 404, 406, zwei Kommunikationsschnittstellen 408, sowie einen synchronisierbaren Zeitgeber 410. Die Elemente des Netzwerkgeräts sind über eine oder mehrere Datenverbindungen oder -busse 412 kommunikativ miteinander verbunden. Die Kommunikationsschnittstellen 408 können über eine physikalische Schnittstelle implementierte logische Schnittstellen oder Ports sein, oder separate physikalische Schnittstellen. Der nichtflüchtige Speicher 406 enthält Programminstruktionen die, wenn sie von dem Mikroprozessor 402 ausgeführt werden, zumindest eine Ausgestaltung des erfindungsgemäßen Verfahrens implementieren.

### BEZUGSZEICHENLISTE

- 100-110: Netzwerkgeräte
- 200: server-basiertes Steuergerät
- 202-206: Switches
- 208-214: Funktionseinheiten
- 220-230: Steuergeräte
- 240-244: Teil-Netzwerke
- 300: Verfahren
- 302-310: Verfahrensschritte
- 400: Funktionseinheit
- 402: Mikroprozessor
- 404: RAM
- 406: ROM
- 408: Kommunikationsschnittstelle
- 410: Zeitgeber
- 412: Bus

## Patentansprüche

1. Verfahren (300) zur Festlegung einer Grandmaster Clock in einem System miteinander über ein erstes Netzwerk oder mehrere erste Teil-Netzwerke (240, 242, 244) vernetzter Steuergeräte (200, 220, 222, 224, 226, 228, 230), wobei mindestens eines der vernetzten Steuergeräte ein server-basiertes Steuergerät (200) ist, welches mehrere als Quelle der Grandmaster Clock geeignete, innerhalb des server-basierten Steuergeräts mittels eines zweiten Netzwerks über Switches (202, 204, 206) kommunikativ verbundene Funktionseinheiten (208, 210, 212, 214) in einer physischen Einheit vereint, welche über eine oder mehrere Netzwerk-Schnittstellen mit dem ersten Netzwerk oder mehreren ersten Teil-Netzwerken (240, 242, 244) verbunden ist, umfassend:
- Ermitteln (302) der besten Uhr des Gesamt-Netzwerks,
wobei das Verfahren umfasst, wenn die ermittelte beste Uhr in einem server-basierten Steuergerät liegt:
- Ermitteln (306-2) der Distanzen ausgewählter Funktionseinheiten, welche als Quelle der Grandmaster Clock geeignet sind, zu ausgewählten aktiven Netzwerk-Schnittstellen, welche das server-basierte Steuergerät mit dem ersten Netzwerk oder mehreren ersten Teil-Netzwerken verbinden,
- Bestimmen (306-3) der mittleren Distanz zu allen ausgewählten Netzwerk-Schnittstellen für jede der ausgewählten Funktionseinheiten, und
- Festlegen (310) der ausgewählten Funktionseinheit, welche die kleinste mittlere Distanz zu allen ausgewählten Netzwerk-Schnittstellen aufweist, als festgelegte Grandmaster Clock für das erste Netzwerk oder die ersten Teil-Netzwerke.

2. Verfahren (300) nach Anspruch 1, wobei ausgewählte Funktionseinheiten alle als Quelle der Grandmaster Clock geeigneten Funktionseinheiten des server-basierten Steuergeräts sind, und für die Uhren aller Funktionseinheiten die Distanzen zu den ausgewählten aktiven Netzwerk-Schnittstellen ermittelt werden.

3. Verfahren (300) nach Anspruch 1, wobei ausgewählte Funktionseinheiten diejenigen Funktionseinheiten des server-basierten Steuergeräts sind, welche vorbestimmte Mindestanforderungen erfüllen, und wobei nur für die Uhren dieser ausgewählten Funktionseinheiten die Distanzen zu den ausgewählten aktiven Netzwerk-Schnittstellen ermittelt werden.

4. Verfahren (300) nach Anspruch 1, wobei ausgewählte Funktionseinheiten diejenigen Funktionseinheiten des server-basierten Steuergeräts sind, welche die Nachrichten zur Zeitsynchronisation der besten Uhr zu einer Netzwerk-Schnittstelle weiterleiten, und wobei nur für die Uhren dieser ausgewählten Funktionseinheiten die Distanzen zu den ausgewählten aktiven Netzwerk-Schnittstellen ermittelt werden.

5. Verfahren (300) nach einem der vorhergehenden Ansprüche, wobei ausgewählte aktive Netzwerk-Schnittstellen alle aktiven Netzwerk-Schnittstellen des server-basierten Steuergeräts sind.

6. Verfahren (300) nach einem der vorhergehenden Ansprüche 1 - 4, wobei ausgewählte aktive Netzwerk-Schnittstellen nur Netzwerk-Schnittstellen des server-basierten Steuergeräts sind, die erste Teil-Netzwerke verbinden, an welche Steuergeräte angeschlossen sind, die eine zeitkritische Anwendung ausführen.

7. Verfahren (300) nach einem der vorhergehenden Ansprüche, wobei die festgelegte Grandmaster Clock innerhalb des server-basierten Steuergeräts mit der durch Anwendung des Best Master Clock Algorithmus ermittelten besten Uhr synchronisiert ist.

8. Verfahren (300) nach Anspruch 7, wobei die festgelegte Grandmaster Clock Nachrichten zur Zeitsynchronisation in einer Basis-Zeitdomäne von einer innerhalb des server-basierten Steuergeräts durch Anwendung des Best Master Clock Algorithmus ermittelten besten Uhr empfängt und eine in den empfangenen Nachrichten zur Zeitsynchronisation enthaltene Identifikation der Uhr gegen eine eigene Identifikation austauscht, bevor sie die Nachrichten zur Zeitsynchronisation in das erste Netzwerk oder die ersten Teil-Netzwerke weitersendet.

9. Verfahren (300) nach einem der vorhergehenden Ansprüche, wobei das Ermitteln der besten Uhr umfasst:
- Ausführen des BMCA gemäß IEEE 802.1AS, Version 2011.

10. Computerprogrammprodukt umfassend Befehle, die bei der Ausführung des Programms durch einen Prozessor (402) einer Funktionseinheit (208, 210, 212, 214) eines server-basierten Steuergeräts (200) diese veranlassen, das Verfahren nach einem der Ansprüche 1 bis 9 auszuführen.

11. Computerlesbares Medium, auf dem das Computerprogrammprodukt nach Anspruch 10 gespeichert ist.

12. Funktionseinheit (208, 210, 212, 214) eines server-basierten Steuergeräts (200) umfassend einen Mikroprozessor (402), flüchtigen und nichtflüchtigen Speicher (404, 406), einen synchronisierbaren Zeitgeber (410) und mindestens einer Kommunikationsschnittstelle (408), welche über eine oder mehrere Datenleitungen oder -busse (412) kommunikativ miteinander verbunden sind, wobei die Funktionseinheit dazu eingerichtet ist, das Verfahren nach einem oder mehreren der Ansprüche 1 - 9 auszuführen.

13. Server-basiertes Steuergerät (200) mit mehreren über ein zweites Netzwerk miteinander kommunikativ verbundenen Funktionseinheiten (208, 210, 212, 214) nach Anspruch 12 und mindestens einem Switch (202, 204, 206), wobei eine Netzwerk-Schnittstelle einer Funktionseinheit (214) oder eines Switches (202, 206) das zweite Netzwerk mit einem ersten Netzwerk verbindet, oder mehrere Netzwerk-Schnittstellen von Funktionseinheiten oder Switches das zweite Netzwerk mit jeweils mit einem von mehreren ersten Teil-Netzwerken verbinden, welches bzw. welche außerhalb des server-basierten Steuergeräts (200) liegen, wobei zwei oder mehr der Funktionseinheiten oder Switches dazu eingerichtet sind, das Verfahren nach einem oder mehreren der Ansprüche 1 - 9 auszuführen.

14. Fahrzeug mit einem server-basierten Steuergerät nach Anspruch 13.

## Claims

1. Method (300) for defining a grandmaster clock in a system of control devices (200, 220, 222, 224, 226, 228, 230) networked with one another via a first network or multiple first sub-networks (240, 242, 244), wherein at least one of the networked control devices is a server-based control device (200) that combines multiple functional units (208, 210, 212, 214) that are suitable as a source of the grandmaster clock and are connected in terms of communication within the server-based control device by way of a second network via switches (202, 204, 206) in one physical unit, which is connected to the first network or multiple first sub-networks (240, 242, 244) via one or more network interfaces, comprising:
- ascertaining (302) the best clock of the entire network,
wherein the method comprises, when the best clock ascertained is located in a server-based control device:
- ascertaining (306-2) the distances between selected functional units, which are suitable as a source of the grandmaster clock, and selected active network interfaces that connect the server-based control device to the first network or multiple first sub-networks,
- determining (306-3) the average distance to all selected network interfaces for each of the selected functional units, and
- defining (310) the selected functional unit that has the smallest average distance to all selected network interfaces as defined grandmaster clock for the first network or the first sub-networks.

2. Method (300) according to Claim 1, wherein selected functional units are all functional units of the server-based control device that are suitable as a source of the grandmaster clock, and the distances to the selected active network interfaces are ascertained for the clocks of all functional units.

3. Method (300) according to Claim 1, wherein selected functional units are those functional units of the server-based control device that meet predetermined minimum demands, and wherein the distances to the selected active network interfaces are ascertained only for the clocks of these selected functional units.

4. Method (300) according to Claim 1, wherein selected functional units are those functional units of the server-based control device that forward the time synchronization messages of the best clock to a network interface, and wherein the distances to the selected active network interfaces are ascertained only for the clocks of these selected functional units.

5. Method (300) according to one of the preceding claims, wherein selected active network interfaces are all active network interfaces of the server-based control device.

6. Method (300) according to one of preceding Claims 1 - 4, wherein selected active network interfaces are only network interfaces of the server-based control device that connect first sub-networks to which control devices that execute a time-critical application are connected.

7. Method (300) according to one of the preceding claims, wherein the defined grandmaster clock within the server-based control device is synchronized with the best clock ascertained by applying the Best Master Clock algorithm.

8. Method (300) according to Claim 7, wherein the defined grandmaster clock receives time synchronization messages in a base time domain from a best clock ascertained within the server-based control device by applying the Best Master Clock algorithm and exchanges an identification of the clock contained in the received time synchronization messages for its own identification before it retransmits the time synchronization messages into the first network or the first sub-networks.

9. Method (300) according to one of the preceding claims, wherein ascertaining the best clock comprises:
- executing the BMCA in accordance with IEEE 802.1AS, 2011 version.

10. Computer program product comprising commands that, when the program is executed by a processor (402) of a functional unit (208, 210, 212, 214) of a server-based control device (200), prompt same to execute the method according to one of Claims 1 to 9.

11. Computer-readable medium on which the computer program product according to Claim 10 is stored.

12. Functional unit (208, 210, 212, 214) of a server-based control device (200) comprising a microprocessor (402), volatile and non-volatile memory (404, 406), a synchronizable timer (410) and at least one communication interface (408), which are connected to one another in terms of communication via one or more data lines or data buses (412), wherein the functional unit is configured so as to carry out the method according to one or more of Claims 1 - 9.

13. Server-based control device (200) having multiple functional units (208, 210, 212, 214) according to Claim 12 connected to one another in terms of communication via a second network and at least one switch (202, 204, 206), wherein a network interface of a functional unit (214) or of a switch (202, 206) connects the second network to a first network, or multiple network interfaces of functional units or switches connect the second network to in each case one of multiple first sub-networks that is or are located outside of the server-based control device (200), wherein two or more of the functional units or switches are configured so as to carry out the method according to one or more of Claims 1 - 9.

14. Vehicle having a server-based control device according to Claim 13.

## Revendications

1. Procédé (300) permettant de définir une horloge grand maître dans un système d'appareils de commande (200, 220, 222, 224, 226, 228, 230) mis en réseau les uns avec les autres par un premier réseau ou plusieurs premiers sous-réseaux (240, 242, 244),
dans lequel au moins l'un des appareils de commande mis en réseau est un appareil de commande (200) basé sur un serveur, qui combine plusieurs unités fonctionnelles (208, 210, 212, 214), appropriées en tant que source pour l'horloge grand maître et reliées en communication à l'intérieur de l'appareil de commande basé sur un serveur au moyen d'un deuxième réseau par des commutateurs (202, 204, 206), dans une unité physique qui est reliée au premier réseau ou à plusieurs premiers sous-réseaux (240, 242, 244) par une ou plusieurs interfaces de réseau, comprenant l'étape consistant à :
- établir (302) la meilleure horloge du réseau global, le procédé comprenant, lorsque la meilleure horloge déterminée se trouve dans un appareil de commande basé sur un serveur, les étapes consistant à :
- établir (306-2) les distances d'unités fonctionnelles sélectionnées qui sont appropriées en tant que source pour l'horloge grand maître jusqu'à des interfaces de réseau actives sélectionnées qui relient l'appareil de commande basé sur un serveur au premier réseau ou à plusieurs premiers sous-réseaux,
- déterminer (306-3) de la distance moyenne jusqu'à toutes les interfaces de réseau sélectionnées pour chacune des unités fonctionnelles sélectionnées, et
- définir (310) l'unité fonctionnelle sélectionnée qui présente la plus petite distance moyenne jusqu'à toutes les interfaces de réseau sélectionnées en tant qu'horloge grand maître définie pour le premier réseau ou les premiers sous-réseaux.

2. Procédé (300) selon la revendication 1, dans lequel les unités fonctionnelles sélectionnées sont toutes les unités fonctionnelles appropriées en tant que source pour l'horloge grand maître de l'appareil de commande basé sur un serveur, et les distances jusqu'aux interfaces de réseau actives sélectionnées sont établies pour les horloges de toutes les unités fonctionnelles.

3. Procédé (300) selon la revendication 1, dans lequel les unités fonctionnelles sélectionnées sont les unités fonctionnelles de l'appareil basé sur un serveur qui satisfont des exigences minimales prédéterminées, et dans lequel les distances jusqu'aux interfaces de réseau actives sélectionnées ne sont établies que pour les horloges de ces unités fonctionnelles sélectionnées.

4. Procédé (300) selon la revendication 1, dans lequel les unités fonctionnelles sélectionnées sont les unités fonctionnelles de l'appareil de commande basé sur un serveur qui retransmettent à une interface de réseau les messages pour la synchronisation dans le temps de la meilleure horloge, et dans lequel les distances jusqu'aux interfaces de réseau actives sélectionnées ne sont établies que pour les horloges de ces unités fonctionnelles sélectionnées.

5. Procédé (300) selon l'une quelconque des revendications précédentes, dans lequel les interfaces de réseau actives sélectionnées sont toutes les interfaces de réseau actives de l'appareil de commande basé sur un serveur.

6. Procédé (300) selon l'une quelconque des revendications précédentes 1 à 4, dans lequel les interfaces de réseau actives sélectionnées ne sont que les interfaces de réseau de l'appareil de commande basé sur un serveur qui relient les premiers sous-réseaux auxquels sont connectés des appareils de commande qui effectuent une application sensible au temps.

7. Procédé (300) selon l'une quelconque des revendications précédentes, dans lequel l'horloge grand maître définie est synchronisée à l'intérieur de l'appareil de commande basé sur un serveur avec la meilleure horloge établie par l'application de l'algorithme de meilleure horloge maître.

8. Procédé (300) selon la revendication 7, dans lequel l'horloge grand maître définie reçoit des messages pour la synchronisation dans le temps dans un domaine de temps de base d'une meilleure horloge établie par l'application de l'algorithme de meilleure horloge maître à l'intérieur de l'appareil de commande basé sur un serveur, et échange une identification de l'horloge, contenue dans les messages reçus pour la synchronisation dans le temps, contre sa propre identification avant de retransmettre les messages pour la synchronisation dans le temps au premier réseau ou aux premiers sous-réseaux.

9. Procédé (300) selon l'une quelconque des revendications précédentes, dans lequel l'établissement de la meilleure horloge comprend :
- l'exécution de l'algorithme BMCA selon IEEE 802.1 AS, version 2011.

10. Produit de programme informatique, comprenant des instructions qui, lors de l'exécution du programme par un processeur (402) d'une unité fonctionnelle (208, 210, 212, 214) d'un appareil de commande basé sur un serveur (200), font que celle-ci exécute le procédé selon l'une quelconque des revendications 1 à 9.

11. Support lisible par ordinateur, sur lequel est stocké le produit de programme informatique selon la revendication 10.

12. Unité fonctionnelle (208, 210, 212, 214) d'un appareil de commande basé sur un serveur (200), comprenant un microprocesseur (402), de la mémoire volatile et non volatile (404, 406), un temporisateur (410) pouvant être synchronisé, et au moins une interface de communication (408) qui sont reliées en communication les unes aux autres par une ou plusieurs lignes ou bus de données (412), dans laquelle l'unité fonctionnelle est conçue pour exécuter le procédé selon une ou plusieurs des revendications 1 à 9.

13. Appareil de commande basé sur un serveur (200), comprenant plusieurs unités fonctionnelles (208, 210, 212, 214) selon la revendication 12, reliées en communication les unes aux autres par un deuxième réseau, et au moins un commutateur (202, 204, 206), dans lequel une interface de réseau d'une unité fonctionnelle (214) ou d'un commutateur (202, 206) relie le deuxième réseau à un premier réseau, ou plusieurs interfaces de réseau d'unités fonctionnelles ou de commutateurs relient le deuxième réseau à respectivement l'un parmi plusieurs premiers sous-réseaux qui se trouvent à l'extérieur de l'appareil de commande basé sur un serveur (200), dans lequel deux ou plusieurs des unités fonctionnelles ou des commutateurs sont conçus pour exécuter le procédé selon une ou plusieurs des revendications 1 à 9.

14. Véhicule, comprenant un appareil de commande basé sur un serveur selon la revendication 13.
